# EUROPÄISCHE PATENTANMELDUNG

(11) **EP 1 284 166 A1**
(43) Veröffentlichungstag der Anmeldung: **19.02.2003**
(21) Anmeldenummer: 01119981.7
(22) Anmeldetag: 18.08.2001
(51) Int. Cl.: B21D 19/00, B32B 15/00, B32B 15/01, B32B 3/04

(54) **Sandwichelement und Vorrichtung zur Herstellung desselben**

(71) Anmelder: Ford Global Technologies, Inc., A subsidiary of Ford Motor Company, Dearborn, Michigan 48126 (US)
(72) Erfinder: Porschen, Peter, 50170 Kerpen (DE); Sweeney, Kevin Eugene, 52072 Aachen (DE); Stadtler, Arnold, 50935 Köln (DE)
(74) Vertreter: Drömer, Hans-Carsten, Dipl.-Ing.

(57) **Zusammenfassung**

Die Erfindung betrifft ein Sandwichelement mit wenigstens zwei Schichten sowie eine Vorrichtung zum Verbinden mehrerer Schichten eines Sandwichelementes.

Das Sandwichelement hat wenigstens zwei Schichten, die an wenigstens einer Stelle ihres Randes schneckenförmig zu einer Verbindungsstelle aufgerollt und dadurch verbunden sind. Beim Sandwichelement soll vorzugsweise eine Zwischenschicht an ihrer Ober- und Unterseite durch eine Deckschicht abgedeckt sein, die Zwischenschicht an der Verbindungsstelle geteilt und ein Teil mit der oberen Deckschicht verbunden und ein Teil mit der unteren Deckschicht verbunden sein.

Eine erfindungsgemäße Vorrichtung zum Verbinden mehrerer Schichten eines Sandwichelements hat wenigstens zwei hinter einer Zuführungseinrichtung für wenigstens Teile des Randes eines Sandwichelements angeordnete Biegeabschnitte für ein schneckenförmiges Umformen des Sandwichelements aufweist, welche durch einen Vorsprung getrennt und kreisförmig ausgebildet sind.

Die Vorrichtung kann als kleine Aufsteckklammer ausgebildet sein und verwendet werden, welche nach dem Verformen nicht mehr abgezogen wird oder Teil einer komplexen Verarbeitungseinrichtung für Sandwichelemente sein.

## Beschreibung

Die Erfindung betrifft ein Sandwichelement mit wenigstens zwei Schichten sowie eine Vorrichtung zum Verbinden mehrerer Schichten eines Sandwichelementes.

Im Stand der Technik werden die Schichten von Sandwichelementen zum Beispiel durch eine Preßverbindung zusammengehalten, wobei in diesem Fall eine Schicht eine Verzahnung aufweisen muß. Eine derartige Verbindung ist jedoch hinsichtlich der Kraft, welche beide Schichten zusammenhält unzureichend.

Eine weitere Methode mehrere Schichten zu verbinden besteht darin, entsprechende Klebemittel zu verwenden, wobei hier nachteilig hinzukommt, daß für die Verbindung eine zusätzliche Wärmebehandlung erforderlich ist.

Ferner besteht die Möglichkeit, die Schichten durch zusätzliche Schrauben oder Nieten zusammenzuhalten, wobei hier als nachteilig zu erwähnen ist, daß hier keine gleichmäßige Flächenpreßkraft erzeugt werden kann und bei der Verbindung die Oberfläche des Sandwichelementes verformt wird.

Der Erfindung liegt daher das Problem zugrunde, eine Verbindung und eine geeignete Vorrichtung zur Verbindung von mehreren Schichten eines Sandwichelementes zu schaffen, welche weder zusätzliche Bauteile wie Schrauben oder Nieten noch eine zusätzliche Wärmebehandlung erfordert und eine stabile Verbindung der Schichten gewährleistet.

Das Problem wird erfindungsgemäß durch die Merkmale der Ansprüche 1 und 7 gelöst. Weiterbildungen der Erfindung sind in den abhängigen Ansprüchen erfasst.

Erfindungsgemäß wird dazu ein Sandwichelement vorgeschlagen, wobei die Schichten des Sandwichelementes an wenigstens einer Stelle schneckenförmig aufgerollt sind und dadurch verbunden sind. Durch das schneckenförmige Aufrollen werden beiden Schichten zusammen verformt und aufeinander aufgewickelt. Dadurch entsteht eine formschlüssig verbundene Struktur, welche haltbar ist und eine gute Verbindung ohne zusätzliche Hilfsmittel, Klebemittel oder Nachbehandlungen darstellt.

Das Sandwichelement kann in vorteilhafter Weise mit einer Zwischenschicht versehen sein, welche an ihrer Ober- und Unterseite durch eine Deckschicht abgedeckt ist. Die Zwischenschicht wird dann bei der Verformung aufgeteilt, wobei ein Teil mit der oberen Deckschicht verbunden ist und ein anderer Teil mit der unteren Deckschicht verbunden ist. Damit werden alle drei Schichten formschlüssig miteinander verbunden, so daß eine insgesamt sehr stabile Verbindung entsteht. Die Verbindungen werden in entgegengesetzter Richtung aufgerollt, wobei schließlich eine obere und eine untere Verbindung entsteht. Die Zwischenschicht ist damit mit beiden Deckschichten verbunden und stellt damit auch eine mittelbare Verbindung der beiden Deckschichten selbst dar.

Die Verbindung wird dadurch verbessert, daß eine der Schichten nach dem Verbinden plastisch verformt ist, so daß ein Zurückverformen nach den Verbinden verhindert ist. Die plastische Verformung kann einfach dadurch erreicht werden, indem wenigstens für eine Schicht ein plastisch verformbarer Werkstoff gewählt wird. Während der plastischen Verformung werden in das Gefüge bewußt Versetzungen eingebracht, die eine Rückverformung des Materials verhindern. Solche Werkstoffe sind zum Beispiel Aluminium, Eisenlegierungen mit bestimmten Kohlenstoffgehalten wie sie aus der Werkstofftechnologie allgemein bekannt sind. Die Wahl von Aluminium bietet zudem den Vorteil des sehr geringen Gewichtes und der geringen Wärmeleitfähigkeit.

Die Schichten können zusätzlich in der Verbindungsstelle und/oder die übrige Fläche mittels eines Klebemittels verbunden sein.

Ferner wird zur erfindungsgemäßen Lösung nach Anspruch 7 eine Vorrichtung zum Verbinden mehrerer Schichten eines Sandwichelementes vorgeschlagen, wobei die Vorrichtung zwei Biegeabschnitte aufweist, welche durch einen Vorsprung getrennt sind und kreisförmig ausgebildet sind. Das Sandwichelement wird auf den Vorsprung hinzubewegt, wobei der Vorsprung die Schichten des Sandwichelementes aufteilt, so daß diese in den Biegeabschnitt eingeführt werden und entsprechend der kreisförmigen Ausbildung der Biegeabschnitte schneckenförmig aufgerollt werden.

Die Vorrichtung kann in einer Gesamtvorrichtung angeordnet sein, mit der die Sandwichelemente auch in die Vorrichtung eingeführt werden. Sie kann jedoch auch als einfach zu handhabendes Werkzeug verwendet werden, welches dann auf die statisch feste Sandwichplatte seitlich auf den offenen Rand des Sandwichelementes aufgedrückt wird und anschließend vertikal zu der Zuführbewegung abgezogen wird.

Der Vorsprung kann als Spitze oder auch als Stumpf ausgebildet sein, wobei lediglich gewährleistet sein muß, daß durch den Vorsprung die Schichten aufgetrennt werden können. Handelt es sich zum Beispiel um eine Sandwichstruktur, dessen Zwischenschicht wellenförmig ausgebildet ist, so reicht auch ein stumpfer Vorsprung aus, der die Zwischenschicht zusammenschiebt und auftrennt, wobei dann die Deckschichten in den kreisförmigen Biegeabschnitten aufgerollt werden und mit dem geteilten wellenförmigen Abschnitt verbunden werden. Wichtig bei der Ausführung des Vorsprunges ist lediglich, daß durch diese die Zwischenschicht aufgetrennt werden kann.

Die Vorrichtung kann zusätzlich einen Zuführabschnitt aufweisen, an dessen Ende die Biegeabschnitte angeordnet sind und welcher derart angeordnet ist, daß das Sandwichelement beim Zuführen durch den Zuführabschnitt auf den Vorsprung trifft. Damit ist eine verbesserte Führung des Sandwichelementes während des Verbindungsprozesses sichergestellt.

Die Vorrichtung kann sowohl als statisches Werkzeug verwendet werden als auch als Verbindungselement, welches auf die Endseite aufgesteckt wird und auf dem Sandwichelement belassen wird.

Der Zuführabschnitt kann zusätzlich eine Verzahnung vorsehen, welche in Richtung der Biegeabschnitte ausgerichtet ist. Damit wird ein Abziehen der Vorrichtung nach dem Verbinden sicher verhindert.

Hinter der Verzahnung kann zusätzlich eine Ausnehmung vorgesehen sie, so daß die während der Zuführbewegung entstehenden Reibkräfte vermindert sind und aufgestautes Material entweichen kann.

Die Biegeabschnitte können an ihrem von dem Vorspruch abgewandten Ende in einem spitzen Winkel zu dem Sandwichelement verlaufen, so daß die verformten Enden sich mit dem unverformten Sandwichelement verkeilen. Damit ist eine Rückverformung zusätzlich sicher verhindert.

Die Erfindung wird nachfolgend anhand eines bevorzugten Ausführungsbeispiels näher erläutert. Die Figuren zeigen im einzelnen:
- Figur 1: Sandwichelement mit zwei Deckschichten und einer wellenförmigen Zwischenschicht;
- Figur 2: Vorrichtung zum Verbinden mehrerer Schichten eines Sandwichelementes mit spitzem Vorsprung;
- Figur 3: Vorrichtung zum Verbinden mehrerer Schichten eines Sandwichelementes mit stumpfem Vorsprung;
- Figur 4: Vorrichtung zum Verbinden mehrerer Schichten eines Sandwichelementes mit einem Zuführabschnitt und darin angeordneter Verzahnung;
- Figur 5: Vorrichtung zum Verbinden mehrerer Schichten eines Sandwichelementes mit einem Zuführabschnitt, darin angeordneter Verzahnung und dahinter vorgesehener Ausnehmung;
- Figur 6: Vorrichtung zum Verbinden mehrerer Schichten eines Sandwichelementes mit darin angeordnetem Sandwichelement mit wellenförmiger Zwischenschicht;
- Figur 7: Vorrichtung zum Verbinden mehrerer Schichten eines Sandwichelementes mit einem darin angeordneten Sandwichelement mit homogener Zwischenschicht;

In Figur ist ein Sandwichelement 1 zu erkennen, welches eine obere Deckschicht 2 und eine untere Deckschicht 11 aufweist, zwischen denen eine wellenförmige Zwischenschicht 3 vorgesehen ist. Solche Sandwichelemente haben den Vorteil, daß sie eine hohe Festigkeit bieten und dennoch sehr leicht sind. Ferner können solche Sandwichelemente zur Wärmeisolierung verwendet werden, da die zwischen beiden Deckschichten vorgesehenen Luftschichten als Wärmeisolierung dienen. Die Schichten können z.B. aus Aluminium gefertigt sein, wodurch das Gewicht und die Wärmeleitfähigkeit weiter reduziert wird. Außerdem findet bei der Verformung von Aluminium eine hohe Kaltverformung statt, durch die eine Rückverformung verhindert wird und die Verbindung besonders versteift wird.

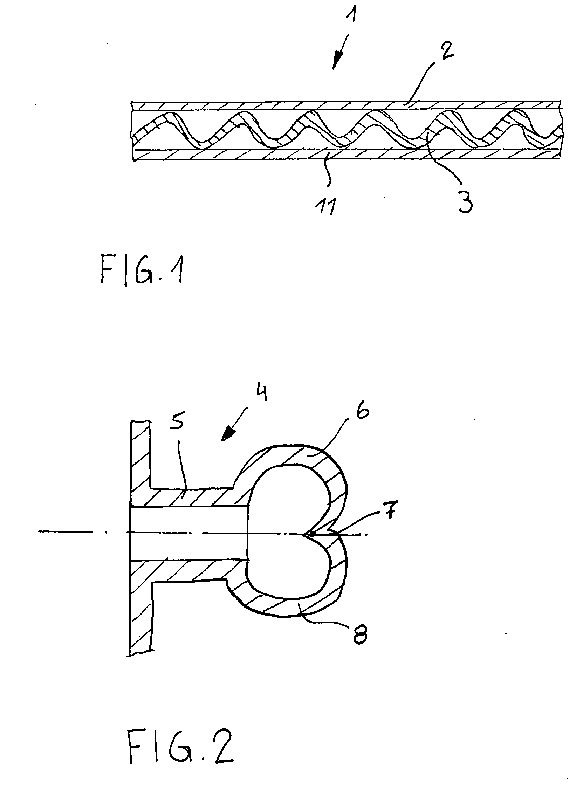

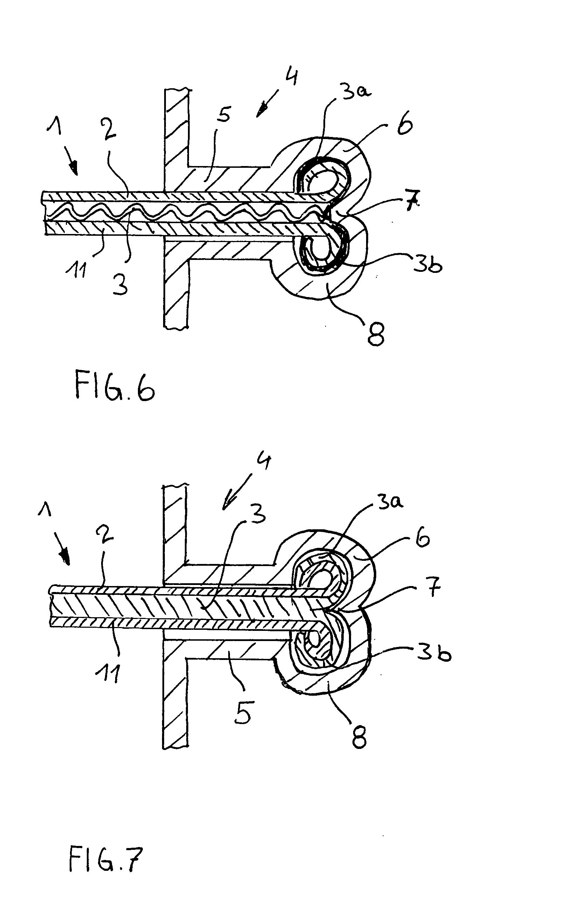

In Figur 2 ist eine erfindungsgemäße Vorrichtung zum Verbinden mehrerer Schichten ( Fig. 6, 7) eines Sandwichelementes, nachfolgend Umformwerkzeug 4 genannt, dargestellt, welche zwei kreisförmige Biegeabschnitte 6 und 8 aufweist. Zwischen den Biegeabschnitten 6 und 8 ist ein spitzer Vorsprung 7 vorgesehen, vor den das Sandwichmaterial stößt, wenn es durch den Zuführabschnitt 5 in die Biegeabschnitte 6 und 8 gedrückt und schneckenförmig umgeformt wird.

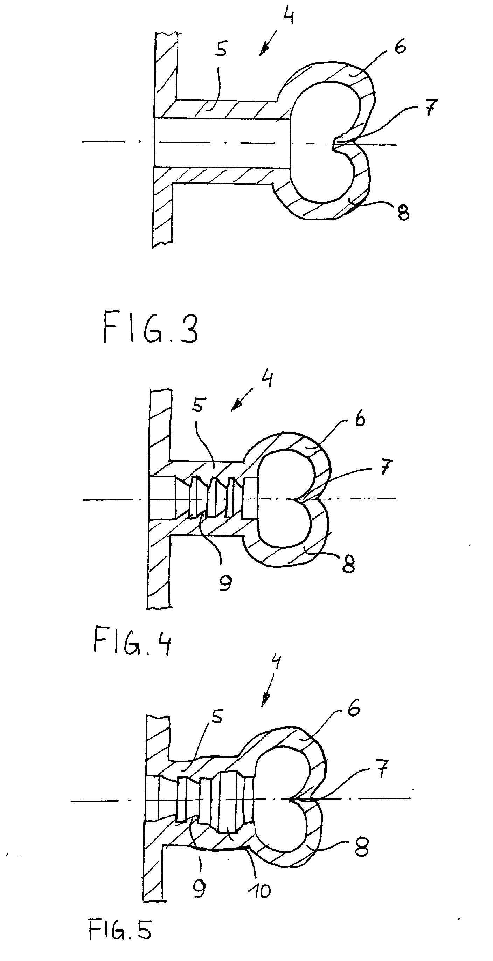

In Figur 3 ist ein ähnliches Umformwerkzeug 4 wie in Figur 3 zu erkennen, wobei hier der Vorsprung 7 stumpf ausgebildet ist.

In Figur 4 ist ein weiterentwickeltes Umformwerkzeug 4 zu erkennen, bei dem in dem Zuführabschnitt 5 eine Verzahnung 9 vorgesehen ist. Die Verzahnung 9 ist zu den Biegeabschnitten 6 und 8 hin ausgerichtet.

In Figur 5 ist der Zuführabschnitt 5 aus der Figur 4 weiterentwickelt und weist in Zuführrichtung hinter der Verzahnung 9 eine Ausnehmung 10 auf. In der Ausnehmung 10 kann verdichtetes Material während und/oder nach dem Verbindungsprozess aufgenommen werden, so daß die Zuführbewegung in den Zuführabschnitt 5 nicht gehemmt wird, und für den Fall, daß das Umformwerkzeug 4 auf dem Sandwichelement verbleibt nach außen keine Dellen entstehen.

In Figur 6 ist das Umformwerkzeug 4 mit darin angeordnetem Sandwichelement 1 zu erkennen. Das Sandwichelement 1 weist eine obere und eine untere Deckschicht 2 und 11 auf zwischen denen eine wellenförmige Zwischenschicht 3 vorgesehen ist. Das Sandwichelement 1 ist bereits in das Umformwerkzeug 4 eingeführt, wobei der Zuführabschnitt 5 auf den Vorsprung 7 hin gerichtet ist. Der Vorsprung 7 ist stumpf ausgebildet und teilt die wellenförmige Zwischenschicht 3 in den oberen Teil 3a und den unteren Teil 3b. Dabei kann eine Verdichtung der Zwischenschicht 3 akzeptiert werden, solange diese aufgeteilt wird. Hierbei ist insbesondere auf die Form des Vorsprunges 7 zu achten, der fallweise dann spitzer zu wählen ist. Durch das Aufteilen des Sandwicheelementes 1 ist die obere Deckschicht 2 in den oberen Biegeabschnitt 6 und die untere Deckschicht 11 in den unteren Biegeabschnitt 8 eingeführt worden. Aufgrund der kreisförmigen Formgebung der Biegeabschnitte 6 und 8 werden die Deckschichten 2 und 11 während der Zuführbewegung schneckenförmig aufgerollt, wobei die Teile 3a und 3b an der Zwischenschicht 3 außen anliegend mit aufgerollt werden. Der Verbindungsprozeß endet, wenn die Deckschichten 2 und 11 soweit schneckenförmig aufgerollt sind, daß ihre Enden auf dem Sandwichelement 1 zu liegen kommen. Dabei ist es wünschenswert, daß die Enden der Deckschichten 2 und 11 in einem spitzen Winkel zu dem Sandwichelement verlaufen, so daß diese sich zusätzlich verkeilen und nicht zurückverformen können. Wenigstens eine der Deckschichten 2 oder 11 oder die Zwischenschicht 3 sind aus einem Material hergestellt, welches plastisch verformbar ist. Dies kann z.B. Aluminium oder eine Eisenlegierung mit einem bestimmten Kohlenstoffanteil. Denkbar wäre auch die Verwendung von plastisch verformbaren Kunststoffen, wobei fallweise das Umformwerkzeug 4 auch für den Verbindungsprozeß auf eine bestimmte Temperatur erwärmt werden kann.

In Figur 7 ist ein ähnliches Umformwerkzeug 4 zu erkennen, in dem ein Sandwichelement 1 mit einer homogenen Zwischenschicht 3 angeordnet ist. Die homogene Zwischenschicht 3 ist durch den spitzen Vorsprung 7 in die Teile 3a und 3b aufgeteilt und mit den Enden der Deckschichten 2 und 11 in bereits beschriebener Weise kreisförmig verformt. Die Ausbildung des Vorsprunges 7 als Spitze oder Stumpf ist abhängig von der aufzuteilenden Zwischenschicht 3, wobei je nach Dichte, Zähigkeit und Festigkeit der Zwischenschicht 3 die Spitze mehr oder weniger scharf ausgebildet sein kann.

Das Umformwerkzeug 4 kann als kleine Aufsteckklammer ausgebildet sein und verwendet werden, welche nach dem Verformen nicht mehr abgezogen wird. Alternativ kann es auch als feststehendes Werkzeug verwendet werden, wobei das umgeformte Sandwichelement 1 dann vertikal zur Darstellungsebene aus dem Werkzeug herausgenommen werden muss.

### Bezugszeichenliste

- 1.: Sandwichelement
- 2.: Deckschicht
- 3.: Zwischenschicht
- 4.: Umformwerkzeug
- 5.: Zuführabschnitt
- 6.: Biegeabschnitt
- 7.: Vorsprung
- 8.: Biegeabschnitt
- 9.: Verzahnung
- 10.: Ausnehmung
- 11.: Deckschicht

## Patentansprüche

1. Sandwichelement mit wenigstens zwei Schichten (2, 3, 11), **dadurch gekennzeichnet, daß** die Schichten (2, 3, 11) an wenigstens einer Stelle ihres Randes schneckenförmig zu einer Verbindungsstelle aufgerollt und dadurch verbunden sind.

2. Sandwichelement nach Anspruch 1, **dadurch gekennzeichnet, daß** eine Zwischenschicht (3) an ihrer Ober- und Unterseite durch eine Deckschicht (2, 11) abgedeckt ist, die Zwischenschicht (3) an der Verbindungsstelle geteilt und ein Teil (3a) mit der oberen Deckschicht (2) verbunden und ein Teil (3b) mit der unteren Deckschicht (11) verbunden ist.

3. Sandwichelement nach Anspruch 1 oder 2, **dadurch gekennzeichnet, daß** wenigstens eine Schicht (2, 3, 11) eine wellenförmige Struktur aufweist.

4. Sandwichelement nach einem der Ansprüche 1 bis 3, **dadurch gekennzeichnet, daß** wenigstens eine der Schichten (2, 3, 11) nach dem Verbinden plastisch verformt ist.

5. Sandwichelement nach einem der Ansprüche 1 bis 4, **dadurch gekennzeichnet, daß** wenigstens eine der Schichten (2, 3, 11) aus Aluminium besteht.

6. Sandwichelement nach einem der vorangegangenen Ansprüche, **dadurch gekennzeichnet, daß** die Schichten (2, 3, 11) im zusätzlich durch ein Klebemittel verbunden sind.

7. Vorrichtung zum Verbinden mehrerer Schichten (2, 3, 11) eines Sandwichelementes (1), **dadurch gekennzeichnet, daß** die Vorrichtung wenigstens zwei hinter einer Zuführungseinrichtung (5) für wenigstens Teile des Randes eines Sandwichelements angeordnete Biegeabschnitte (6, 8) für ein schneckenförmiges Umformen des Sandwichelements aufweist, welche durch einen Vorsprung (7) getrennt und kreisförmig ausgebildet sind.

8. Vorrichtung nach Anspruch 7, **dadurch gekennzeichnet, daß** ein Zuführabschnitt (5) vorgesehen ist, der an seinem einen Ende in die Biegeabschnitte (6, 8) übergeht und derart angeordnet ist, daß das Sandwichelement (1) beim Zuführen durch den Zuführabschnitt (5) auf den Vorsprung (7) trifft.

9. Vorrichtung nach Anspruch 8, **dadurch gekennzeichnet, daß** der Zuführabschnitt (5) eine in Richtung der Biegeabschnitte (6, 8) gerichtete Verzahnung (9) aufweist.

10. Vorrichtung nach Anspruch 9, **dadurch gekennzeichnet, daß** in Zuführrichtung hinter der Verzahnung (9) eine Ausnehmung (10) vorgesehen ist.

11. Vorrichtung nach einem der Ansprüche 7 bis 10, **dadurch gekennzeichnet, daß** die Biegeabschnitte (6, 8) an ihrem von dem Vorsprung (7) abgewandten Ende in einem Winkel ≤ 90° zu dem Zuführabschnitt verlaufen.
